Europäisches Patentamt

(19) European Patent Office

Office européen des brevets

(11) Numéro de publication : **0 129 632 B1**

(12) **FASCICULE DE BREVET EUROPÉEN**

(45) Date de publication du fascicule du brevet :
25.03.87

(21) Numéro de dépôt : **83830125.7**

(22) Date de dépôt : **23.06.83**

(51) Int. Cl.⁴ : **B 60 K 20/14**

(54) **Dispositif hydraulique d'actionnement d'un élément de commande d'un mécanisme, notamment de changement de vitesse.**

(43) Date de publication de la demande :
**02.01.85 Bulletin 85/01**

(45) Mention de la délivrance du brevet :
**25.03.87 Bulletin 87/13**

(84) Etats contractants désignés :
**DE FR GB IT SE**

(56) Documents cités :
**EP-A- 0 014 143**
**DE-C-   695 882**
**DE-C-   704 328**
**GB-A- 1 196 691**
**US-A- 2 180 154**

(73) Titulaire : **BENDIX ITALIA S.p.A.**
**Via Cavalli 53 A Casella Postale 66**
**I-26013 Crema (IT)**

(72) Inventeur : **Cadeddu, Leonardo**
**Via Piacenza 29**
**Crema (IT)**

(74) Mandataire : **Poidatz, Emmanuel et al**
**Service Brevets Bendix 44 rue François 1er**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne les dispositifs hydrauliques d'actionnement d'un élément de commande d'un mécanisme, notamment de changement de vitesse, pour déplacer sélectivement l'élément de commande dans au moins deux positions opposées de part et d'autre d'une position centrale de repos, le dispositif comprenant deux vérins couplés de façon antagonistes à l'élément de commande et actionnables individuellement, sous l'effet de moyens de commande, pour déplacer respectivement l'élément de commande vers l'une ou l'autre desdites deux positions écartées de la position de repos, et des moyens de rappel élastiques pour ramener l'élément de commande vers sa position de repos lorsqu'aucun des vérins n'est actionné.

Un tel dispositif est décrit par exemple dans le brevet allemand DE-C-1 163 164 ou dans le brevet européen EP-A-00 141 43. Ce type de dispositif à vérins antagonistes présente l'inconvénient que l'actionnement de l'élément de commande dans un sens par un des vérins doit s'effectuer en repoussant l'autre vérin, en sus de l'effort nécessaire pour vaincre l'inertie du mécanisme et la force des moyens de rappel.

La présente invention a pour objet de proposer un dispositif hydraulique d'actionnement permettant d'éviter cette interaction entre les deux vérins et de supprimer l'influence du vérin inactif en autorisant ainsi une commande plus sensible et à temps de réponse amélioré, tout en assurant un rappel rapide et un maintien fiable et précis de l'élément de commande dans sa position de repos lorsqu'aucun des vérins n'est actionné.

Pour ce faire, selon la présente invention, la tige de chaque vérin est couplée à l'élément de commande par un accouplement présentant une course morte au moins dans le sens normal d'actionnement de la tige de vérin.

Selon un aspect particulier de l'invention, la tige de chaque vérin présente, à son extrémité libre, une structure de couplage présentant une ouverture allongée délimitée axialement par une face extérieure et une face intérieure en vis-à-vis et dans laquelle est reçu avec jeu un organe de couplage solidaire de l'élément de commande, les deux structures de couplage étant juxtaposées parallèlement l'une à l'autre, les dimensions axiales, c'est-à-dire rapportées à la direction de déplacement des tiges de vérins, des ouvertures et de l'organe de couplage étant telles que, dans la condition de repos des vérins, l'organe de couplage soit en contact avec les faces extérieures de chaque structure de couplage, l'élément de commande étant alors dans sa position de repos.

La présente invention s'applique plus particulièrement, quoique non limitativement, à un système de changement de vitesse de véhicule automobile à commande impulsionnelle tel que décrit dans le brevet européen EP-A-00 141 43 susmentionné, dont le contenu est supposé intégré ici pour référence.

La présente invention sera mieux comprise au vu de la description suivante d'un mode de réalisation particulier, donné à titre illustratif mais nullement limitatif, faite en relation avec les dessins annexés, sur lesquels :

la figure 1 est une vue en coupe d'un dispositif hydraulique d'actionnement d'un mécanisme de changement de véhicule automobile à actionnement pas à pas et à échappement ;

la figure 2 est une vue partielle en coupe suivant la ligne 2-2 de la fig. 1 ; et

la figure 3 est une vue détaillée de la commande de l'arbre principal du système de changement de vitesse représenté sur la fig. 1.

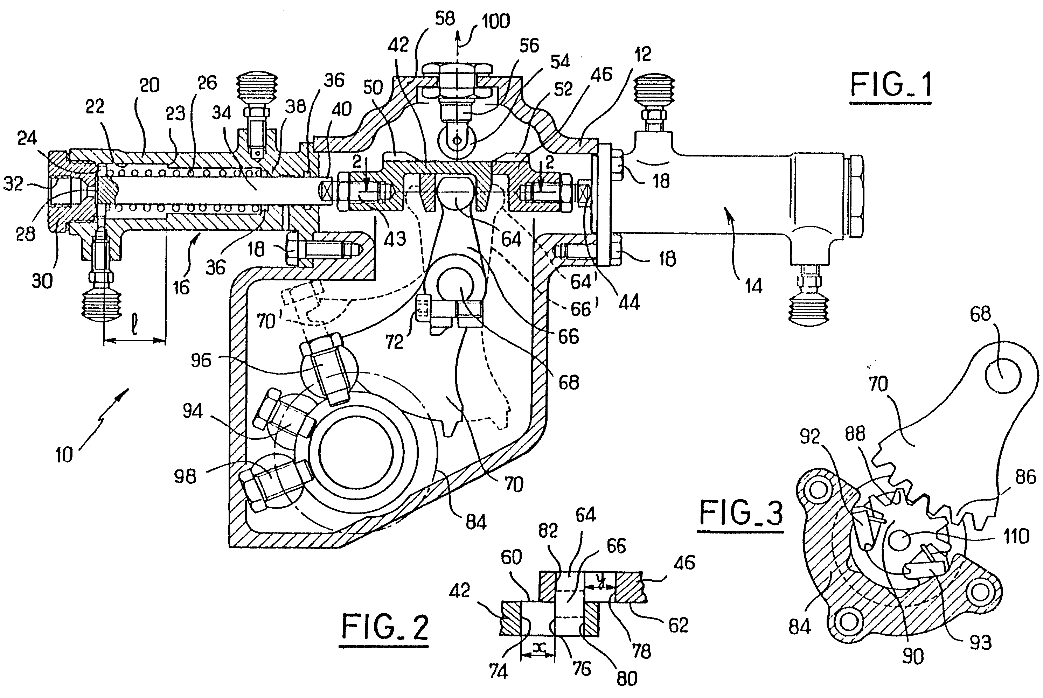

Le dispositif hydraulique d'actionnement représenté sur la fig. 1, désigné généralement par la référence 10, comprend un boîtier 12 sur lequel sont montés en opposition deux vérins hydrauliques 14 et 16 au moyen de vis de fixation 18. Les deux vérins 14 et 16 étant parfaitement identiques, on ne décrira en détail que le vérin 16 représenté en coupe sur la fig. 1. Ce vérin 16 comprend un boîtier cylindrique 20 dans lequel est formé un alésage étagé 22 qui reçoit en coulissement un piston 24. Le piston 24 est susceptible de se déplacer dans l'alésage 22, à l'encontre d'un ressort de rappel 26 disposé dans l'alésage 22, sous l'effet d'une pression hydraulique de commande admise dans la chambre de pression 28 définie entre le piston 24 et le bouchon de fermeture 30 disposé à l'extrémité du boîtier 20 opposée au boîtier 12. La chambre de pression 28 est alimentée en fluide sous pression à travers une électrovanne (non représentée) qui commande l'arrivée du fluide sous pression à l'orifice d'entrée 32 du vérin 16 formé dans le bouchon 30. Le piston 24 est solidaire d'une tige de vérin 34 qui coulisse de façon étanche, grâce à des joints annulaires 36, à travers la paroi extrême 38 du boîtier 20 opposée au bouchon 30 pour se prolonger, au-delà du boîtier 20, à l'intérieur du boîtier 12.

La tige 34 du piston 24 est munie, à son extrémité libre 40 faisant saillie dans le boîtier 12, d'une structure de couplage de configuration générale en U 42 fixée à l'extrémité 40 de la tige 34 par un moyen de liaison réglable, telle qu'une liaison vissée 43 dans le mode de réalisation représenté. De façon symétrique, sur l'extrémité de la tige 44 du vérin 14 est fixée, dans le prolongement de la tige 44, une structure de couplage en U 46 analogue à la structure de couplage 42. Les structures de couplage en U ou crochets 42 et 46 sont munis, sur leur face supérieure, de bossages formant rampes 50 et 52, respectivement. Les bossages 50 et 52 sont susceptibles de coopérer, lors de l'extension des tiges 34 ou 44, avec la roulette 54 d'un interrupteur de fin de course 56 qui est fixé dans la paroi supérieure 58 du boîtier 12 et qui est relié électriquement, par une ligne 100, aux électrovannes, ou préférablement à l'électrovanne commune, de commande des vérins 14 et 16.

Comme on le voit plus précisément sur la fig. 2, les deux crochets de couplage 42 et 46 sont juxtaposés latéralement l'un à l'autre et coopèrent en coulissement par leurs faces latérales planes coopérantes 60 et 62 pour assurer leur propre guidage latéral en empêchant ainsi toute rotation des tiges de piston 34 et 44 et donc des crochets de couplage 42 et 46 eux-mêmes. Dans le mode de réalisation représenté, les crochets de couplage 42 et 46 coopèrent avec une partie d'extrémité cylindrique 64 d'un levier de commande 66 pour provoquer la rotation de ce dernier autour d'un axe transversal 68 auquel le levier 66 est lié en rotation, l'axe 68 étant monté tournant dans le boîtier 12. Un deuxième levier 70 est également lié en rotation à l'axe 68 au moyen d'une vis de serrage 72, ce second levier 70 s'étendant dans la direction opposée au levier de commande 66 par rapport à l'axe 68.

Comme on le voit sur les fig. 1 et 2, il est prévu une course morte x entre la face interne intérieure 74 (c'est-à-dire du côté de la tige 34 de piston 24) du crochet de couplage 42 et la paroi latérale adjacente 76 de la partie d'extrémité transversale 64 du levier 66. De la même façon il est prévu une course morte y entre la face interne intérieure 78 (du côté de la tige 44 de piston) du crochet 46 et de la paroi latérale adjacente de la partie d'extrémité 64. Dans la configuration de repos des vérins 14 et 16 représentée sur les fig. 1 et 2, c'est-à-dire avec les pistons rappelés contre les bouchons par les ressorts de rappel, la partie d'extrémité 64 est en contact avec les faces internes extérieures 80 et 82, respectivement, des crochets de couplage 42 et 46, le levier de commande 66 occupant alors sa position centrale de repos de part et d'autre de laquelle il peut être déplacé en actionnant l'un ou l'autre des vérins 14 et 16. Lors de l'actionnement du vérin 16, grâce à la course morte y, le crochet de couplage 42 peut se déplacer vers la droite (sur les fig. 1 et 2) sans provoquer de déplacement correspondant du crochet de couplage de l'autre vérin 14 ; en effet, dans un premier temps, le crochet 42 se déplace de la course morte x, sans que le levier de commande 66 ne soit déplacé, et ce n'est qu'à l'issue d'un déplacement correspondant à cette course morte x que la face intérieure 74 vient en contact avec la paroi transversale correspondante 76 de la partie d'extrémité 64, le complément de déplacement du crochet 42 provoquant alors le déplacement de la partie d'extrémité 64 se traduisant par une rotation du levier vers l'une de ces positions écartées représentées en traits pointillés en 66', dans laquelle la partie d'extrémité 64 vient au voisinage de la face intérieure 78 de l'autre crochet 46 qui est demeuré tout ce temps immobile. Par raison de symétrie de fonctionnement, la course morte x est de préférence égale à la course morte y. Pour éviter toute détérioration de la partie d'extrémité 64 du levier 66 et du crochet de couplage 46 lors du déplacement du crochet 42, le piston 24 du vérin 16 vient en butée sur l'épaulement 23 formé dans l'alésage 22 avant que la paroi transversale de la partie d'extrémité 64 ne vienne buter contre la face intérieure 78 du crochet 46. On comprendra donc que la course maximum l du piston 24 est inférieure à la somme des courses mortes x + y.

Dans le mode de réalisation représenté, correspondant à la réalisation d'un dispositif de commande tel que celui représenté en 40 dans le brevet européen EP 00 141 43, c'est-à-dire pour la commande d'un mécanisme de changement de vitesse de véhicule automobile à actionnement pas à pas et par impulsions, lorsque le piston 24 s'est déplacé de sa course l, le bossage 50 formé sur le crochet de couplage 42 s'est déplacé de la même distance et est venu coopérer avec l'interrupteur de fin de course 54, 56, ce qui a pour effet de désexciter l'électrovanne de commande mentionnée plus haut ; cette dernière interrompt alors la communication de fluide sous pression à la chambre de pression 28 du vérin 16 en faisant en outre communiquer cette chambre de pression 28 avec la bâche du système hydraulique associé. Le piston 24 peut alors reprendre la position de repos représentée sur la fig. 1 sous l'effet de la sollicitation du ressort de rappel 26 qui avait été comprimé d'une longueur l. Le recul du piston 24 de cette course l provoque le recul du crochet de couplage 42 de la même distance, ce dernier venant occuper de nouveau sa position de repos représentée sur les fig. 1 et 2 en ramenant avec lui, par l'intermédiaire de sa face extérieure 80, la partie d'extrémité 64 (et, partant, le levier 66) vers sa position de repos sensiblement en contact avec la face extérieure 82 de l'autre crochet 46.

On a représenté sur les fig. 1 et 3 un mécanisme de commande de changement de vitesse du type « à tambour » dans lequel le changement de vitesse s'effectue par des mouvements de rotation contrôlés autour de l'axe principal de commande 110, l'un des vérins 14 ou 16 étant mis en œuvre pour permettre le passage des rapports croissants, l'autre vérin pour permettre le passage des rapports décroissants. Comme on le voit sur ces fig. 1 et 3, le second levier 70 est muni, à son extrémité libre, d'un secteur denté 86 coopérant en engrènement avec un secteur denté 88 formé sur un basculeur 90 pivotant autour d'un axe coaxial à l'axe 110. Le basculeur 90 entraîne sélectivement en rotation, dans un sens ou dans un autre, le tambour 84 par l'intermédiaire de crabots d'accouplement unidirectionnel 92 ou 93, ces derniers étant susceptibles de s'effacer lors de la rotation en sens inverse du basculeur correspondant au retour vers sa position de repos du levier d'actionnement 66. La rotation du tambour 84 provoque, au moyen de cames non représentées, le déplacement des tiges de sélection de vitesse 94, 96 et 98. Le fonctionnement de la boîte de vitesse proprement dite ne faisant pas partie de l'invention, il ne sera pas décrit ici plus en détail, ce fonctionnement étant connu de l'homme de l'art.

Dans le mécanisme représenté, lorsque l'opérateur désire effectuer un changement de rapport, par exemple dans le sens des rapports croissants, il actionne l'électrovanne qui provoque l'alimentation en pression du vérin 16. Le piston 24, ainsi que son crochet de couplage 42 se déplacent alors de la course I pour amener, comme susmentionné, sans entraîner de déplacement de la tige et du piston du vérin 14, le levier de commande dans la position représentée en 66', le second levier 70 adoptant alors la position en pointillés représentée en 70'. Cette rotation du levier vers la position 70' provoque la rotation dans le sens inverse des aiguilles d'une montre du basculeur 90 qui, au moyen du crabot 93, provoque la rotation dans le même sens du tambour 84. En tournant, le tambour 84 provoque, comme susmentionné, au moyen des cames précitées, le déplacement d'une ou de plusieurs des tiges de commande 94, 96, 98 pour réaliser ainsi le changement de rapport voulu. Le retour du piston 24 vers sa position de repos entraîne, comme décrit plus haut, le retour dans leurs configurations de repos de tous les éléments 34, 42, 64, 66, 70 et 90.

**Revendications**

1. Dispositif hydraulique d'actionnement d'un élément de commande (66) d'un mécanisme, notamment de changement de vitesse, pour déplacer sélectivement l'élément de commande (66) dans au moins deux positions opposées (66') de part et d'autre d'une position de repos, le dispositif comprenant : deux vérins (14, 16) couplés de façon antagoniste à l'élément de commande (66) et actionnables individuellement, sous l'effet de moyens de commande, pour déplacer respectivement l'élément de commande (66) vers l'une ou l'autre (66') desdites positions écartées de sa position de repos, et des moyens de rappel élastiques (26) pour ramener l'élément de commande (66) vers sa position de repos lorsqu'aucun des vérins n'est actionné, caractérisé en ce que la tige (34 ; 44) de chaque vérin (14 ; 16) est couplée à l'élément de commande (64, 66) par un accouplement présentant une course morte (x ; y) au moins dans le sens normal d'actionnement de la tige de vérin.

2. Dispositif selon la revendication 1, caractérisé en ce que la tige (34 ; 44) de chaque vérin (14 ; 16) présente, à son extrémité libre (40), une structure de couplage (42 ; 46) comportant une ouverture allongée (74-80 ; 78-82) délimitée axialement par une face extérieure (80 ; 82) et une face intérieure (74 ; 78) en vis-à-vis et dans laquelle est reçu avec jeu un organe de couplage (64) solidaire de l'élément de commande (66), les deux structures de couplage (42 ; 46) étant juxtaposées parallèlement l'une à l'autre, les dimensions axiales des ouvertures et de l'organe de couplage (64) étant telles que, dans la condition de repos des vérins (14 ; 16), l'organe de couplage (64) soit sensiblement en contact avec les faces extérieures (80 ; 82) de chaque structure de couplage (42 ; 46).

.3. Dispositif selon la revendication 2, caractérisé en ce que les structures de couplage (42 ; 46) coulissent l'une contre l'autre par des faces latérales planes de coulissement (60, 62).

4. Dispositif selon la revendication 2 ou la revendication 3, caractérisé en ce que les structures de couplage sont constituées chacune d'une pièce en forme générale de U (42 ; 46) montée de façon réglable sur l'extrémité (40) de la tige de vérin correspondante (34 ; 44).

5. Dispositif selon l'une des revendications précédentes, caractérisé en ce qu'il comprend des moyens (54, 56 ; 23) pour limiter la course d'actionnement de la tige de chaque vérin (14 ; 16) à une distance inférieure à la somme d'une première (x) et une seconde (y) courses mortes.

6. Dispositif selon l'une des revendications précédentes, caractérisé en ce que le piston (24) de chaque vérin (14 ; 16) est muni d'un ressort de rappel (26).

7. Dispositif selon l'une quelconque des revendications précédentes, caractérisé en ce que l'élément de commande est un levier pivotant (66) d'un mécanisme de changement de vitesse de véhicule automobile à actionnement pas à pas et à échappement (90 ; 92, 93 ; 84 ; 94, 96, 98).

**Claims**

1. Hydraulic device for actuating a control element (66) of a mechanism, in particular a speed change mechanism, to selectively displace the control element (66) into at least two opposite positions (66') on either side of a rest position, the device comprising : two jacks (14, 16) connected in opposite senses to the control element (66) and individually actuatable under the action of control means for displacing the control element (66), respectively, towards the one or the other (66') of said positions spaced from its rest position, and resilient return means (26) for returning the control element (66) towards its rest position when none of the jacks is actuated, characterized in that the rod (34 ; 44) of each jack (14 ; 16) is coupled to the control element (64, 66) by a coupling presenting a lost motion (x ; y) at least in the normal sense of actuation of the rod of the jack.

2. Device according to claim 1, characterized in that the rod (34 ; 44) of each jack (14 ; 16) presents at its free extremity (40) a coupling structure (42 ; 46) comprising an elongated opening (74-80 ; 78-82) axially delimited by an external face (80 ; 82) and an internal face (74 ; 78) and receiving with play a coupling member (64) fixedly connected to the control element (66), the two coupling structures (42 ; 46) being arranged in parallel adjacent relationship to each other, the axial dimensions of the openings and the coupling member (64) being such that in the rest position of the jacks (14 ; 16) the coupling member (64) is substantially in contact with the external faces (80 ; 82) of each coupling structure (42 ; 46).

3. Device according to claim 2, characterized in that the coupling structures (42 ; 46) slide with respect to each other at plane lateral sliding faces (60, 62).

4. Device according to claim 2 or claim 3, characterized in that the coupling structures each are comprised of a generally U-shaped member (42 ; 46) adjustably mounted on the extremity (40) of the corresponding jack rod (34 ; 44).

5. Device according to any of the preceding claims, characterized in that it comprises means (54, 46 ; 23) for limiting the actuation stroke of the rod of each jack (14 ; 16) to a distance which is smaller than the sum of first (x) and second (y) lost motion distances.

6. Device according to any of the preceding claims, characterized in that the piston (24) of each jack (14 ; 16) is provided with a return spring (26).

7. Device according to any of the preceding claims, characterized in that the control element is a pivoting lever (66) of a step-by-step actuatable speed change mechanism for an automotive vehicle (90 ; 92, 93 ; 84 ; 94, 96, 98).

**Patentansprüche**

1. Hydraulische Vorrichtung zum Betätigen eines Steuergliedes (66) einer Einrichtung, insbesondere für den Gangwechsel, die dazu dient, das Steuerglied (66) wahlweise in mindestens eine von zwei entgegengesetzten Stellungen (66') beidseitig zu einer Ruhestellung zu verschieben, wobei die Vorrichtung aufweist : zwei Stellmotoren (14, 16), die mit dem Steuerglied (66) gegensinnig gekoppelt sind und unter der Wirkung von Steuermitteln individuell betätigbar sind, um das Steuerglied (66) in Richtung auf die eine oder andere (66') der zur Ruhestellung beabstandeten Stellungen zu verschieben, und elastische Rückholmittel (26) zum Rückführen des Steuergliedes (66) in seine Ruhestellung, wenn keiner der Stellmotoren betätigt ist, dadurch gekennzeichnet, daß die Stange (34, 44) jedes Stellmotors (14, 16) mit dem Steuerglied (64, 66) durch eine Kupplung verbunden ist, die zumindest in der normalen Betätigungsrichtung der Stange des Stellmotors einen Totgang (x ; y) aufweist.

2. Vorrichtung nach Anspruch 1, dadurch gekennzeichnet, daß die Stange (34, 44) jedes Stellmotors (14, 16) an seinem freien Ende (40) eine Kupplungsanordnung (42 ; 46) mit einer länglichen Öffnung (74, 80 ; 78-82) aufweist, die axial von einer Außenfläche (80 ; 82) und einer Innenfläche (74 ; 78) begrenzt wird und in der ein mit dem Steuerglied (66) fest verbundenes Kopplungsglied (64) mit Spiel aufgenommen ist, wobei die beiden Kupplungsanordnungen (42 ; 46) parallel zueinander angeordnet sind, und daß die axialen Abmessungen der Öffnungen und des Kupplungsgliedes (64) derart sind, daß das Kupplungsglied (64) in der Ruhestellung der Stellmotoren (14 ; 16) mit den Außenflächen (80 ; 82) jeder Kupplungsanordnung (42 ; 46) im wesentlichen in Berührung steht.

3. Vorrichtung nach Anspruch 2, dadurch gekennzeichnet, daß die Kupplungsanordnungen (42 ; 46) an ebenen seitlichen Gleitflächen (60, 62) miteinander in Gleitberührung stehen.

4. Vorrichtung nach Anspruch 2 oder 3, dadurch gekennzeichnet, daß die Kupplungsanordnungen jeweils von einem ungefähr U-förmigen Bauteil (42 ; 46) gebildet werden, das an dem Ende (40) der Stange des entsprechenden Stellmotors (34 ; 44) verstellbar angebracht ist.

5. Vorrichtung nach einem der vorhergehenden Ansprüche, gekennzeichnet durch Mittel (54, 56 ; 23) zum Begrenzen des Verstellhubes der Stange jedes Stellmotors (14 ; 16) auf eine Strecke, die kleiner ist als die Summe eines ersten (x) und eines zweiten (y) Totganges.

6. Vorrichtung nach einem der vorhergehenden Ansprüche, dadurch gekennzeichnet, daß der Kolben (24) jedes Stellmotors (14 ; 16) mit einer Rückholfeder (26) versehen ist.

7. Vorrichtung nach einem der vorhergehenden Ansprüche, dadurch gekennzeichnet, daß das Steuerglied ein schwenkbarer Hebel (66) eines stufenweisebetätigbaren Kraftfahrzeug-Gangwechselmechanismus (90 ; 92, 93 ; 84 ; 94, 96, 98) ist.

FIG_1

58 100
42
56
54
52 12
50 46
20 36
22 26 40
23 34 38
24 2 2
32
28
18
30
96 43 64
70' 64'
66'
72 66
68
94
70
98
84
14

10

82 64
60 66
42 46
74 78
76 62
80

FIG_2

68
70
92 88
86
110
84 90 93

FIG_3

0 129 632